(19) **Europäisches Patentamt / European Patent Office / Office européen des brevets**

(11) **EP 1 368 999 B1**

(12) **FASCICULE DE BREVET EUROPEEN**

(45) Date de publication et mention
de la délivrance du brevet:
**27.04.2011 Bulletin 2011/17**

(21) Numéro de dépôt: **02708425.0**

(22) Date de dépôt: **27.02.2002**

(51) Int Cl.:
***H05G 2/00*** *(2006.01)*

(86) Numéro de dépôt international:
**PCT/FR2002/000713**

(87) Numéro de publication internationale:
**WO 2002/074021 (19.09.2002 Gazette 2002/38)**

(54) **PROCEDE POUR GENERER DES PHOTONS PAR SONOLUMINESCENCE**

VERFAHREN ZUR PHOTONENERZEUGUNG DURCH SONOLUMINESZENZ

METHOD FOR GENERATING PHOTONS BY SONOLUMINESCENCE

(84) Etats contractants désignés:
**DE FR GB**

(30) Priorité: **12.03.2001 FR 0103320**

(43) Date de publication de la demande:
**10.12.2003 Bulletin 2003/50**

(73) Titulaire: **CENTRE NATIONAL DE
LA RECHERCHE SCIENTIFIQUE (CNRS)
75794 Paris Cedex 16 (FR)**

(72) Inventeurs:
• **THOMAS, Jean-Louis
F-94800 Villejuif (FR)**
• **FINK, Mathias
F-92190 Meudon (FR)**

(74) Mandataire: **Burbaud, Eric
Cabinet Plasseraud
52 rue de la Victoire
75440 Paris Cedex 09 (FR)**

(56) Documents cités:
• **BERNARD M ET AL: "Trapping of single bubbles in cryogenic fluids" 20TH INTERNATIONAL CONFERENCE ON LOW-TEMPERATURE PHYSICS LT-20, EUGENE, OR, USA, 4-11 AUG. 1993, vol. 194-196, pages 165-166, XP001033427 Physica B, Feb. 1994, Netherlands ISSN: 0921-4526**
• **WU C C ET AL: "A model of sonoluminescence" PROCEEDINGS OF THE ROYAL SOCIETY OF LONDON, SERIES A (MATHEMATICAL AND PHYSICAL SCIENCES), 9 MAY 1994, UK, vol. 445, no. 1924, pages 323-349, XP001033423 ISSN: 0962-8444**
• **IERNETTI G ET AL: "Enhancement of high-frequency acoustic cavitation effects by a low-frequency stimulation" ULTRASONICS: SONOCHEMISTRY, BUTTERWORTH-HEINEMANN, GB, vol. 4, no. 3, 1 juillet 1997 (1997-07-01), pages 263-268, XP004093373 ISSN: 1350-4177**
• **CHODOS A ET AL: "Modeling sonoluminescence" PHYSICAL REVIEW E (STATISTICAL PHYSICS, PLASMAS, FLUIDS, AND RELATED INTERDISCIPLINARY TOPICS), MARCH 1999, APS THROUGH AIP, USA, vol. 59, no. 3, pt.A-B, pages 3001-3007, XP002182901 ISSN: 1063-651X**

## Description

La présente invention est relative aux procédés pour générer des photons par sonoluminescence.

Plus particulièrement, l'invention concerne un procédé pour générer des photons par sonoluminescence, comprenant au moins les étapes suivantes :

(a) générer au moins une onde acoustique stationnaire dans un réservoir de liquide, cette onde acoustique stationnaire présentant au moins un ventre de vibration,
(b) piéger au moins une bulle de gaz dans le liquide au niveau dudit ventre de vibration de l'onde acoustique stationnaire, cette bulle de gaz subissant alors un cycle de déformation périodique comprenant alternativement des phases d'expansion et des phases de contraction,
(e) et générer des ondes acoustiques impulsionnelles dans le liquide, ces ondes acoustiques impulsionnelles se superposant à l'onde acoustique stationnaire et faisant émettre des photons par la bulle de gaz, par sonoluminescence.

Un procédé de ce type a été décrit par Moss et al., qui ont effectué des simulations numériques du comportement d'une bulle de deutérium sous l'action d'une onde acoustique stationnaire sinusoïdale à laquelle est superposée une onde acoustique impulsionnelle ("Sonoluminescence and the prospects for table-top micro-thermonuclear fusion", Physics Letters A 211 (1996) 69-74, Elsevier North Holland, 5 février 1996). D'après Moss et al., l'onde acoustique impulsionnelle superposée à l'onde sinusoïdale permet d'augmenter l'émission de photons par la bulle de gaz, et pourrait même conduire à des conditions permettant le déclenchement d'une réaction de fusion thermonucléaire.

Toutefois, ces résultats théoriques s'avèrent impossibles à mettre en oeuvre avec des amplitudes importantes des ondes impulsionnelles de compression, car on se heurte alors à une impossibilité d'appliquer à la bulle de gaz des ondes acoustiques de compression ayant une amplitude supérieure à 0,14 MPa (1,4 bar), faute de quoi la bulle de gaz se "désintègre" et disparaît sans générer de photons.

La présente invention a notamment pour but de pallier ces inconvénients, de façon à pouvoir le cas échéant appliquer à la bulle de gaz des ondes acoustiques d'amplitude nettement supérieure à 0,14 MPa (1,4 bar).

Un système de génération de photons par sonoluminescence est décrit par exemple dans US-A-5659173.

Plus généralement, l'invention a pour but de proposer un procédé du type susmentionné qui permette d'amplifier le phénomène de sonoluminescence.

A cet effet, selon l'invention, un procédé du genre en question est caractérisé :

- en ce qu'on fait émettre les ondes acoustiques impulsionnelles par un nombre n au moins égal à 2 de transducteurs de tir impulsionnel, disposés autour de la bulle de gaz,
- en ce qu'entre les étapes (b) et (e) sont intercalées une étape (c) d'apprentissage de focalisation et une étape (d) de synchronisation,
- en ce qu'au cours de l'étape (c) d'apprentissage de focalisation, on fait émettre des ondes acoustiques impulsionnelles par les transducteurs de tir impulsionnel, avec une première amplitude suffisamment faible pour ne pas perturber sensiblement la position et le cycle de déformation de la bulle de gaz, on mesure des signaux acoustiques générés par lesdites ondes acoustiques impulsionnelles dans le réservoir de liquide et on en déduit des décalages temporels à appliquer respectivement aux ondes acoustiques impulsionnelles générées par les différents transducteurs de tir impulsionnel pour obtenir une focalisation desdites ondes acoustiques impulsionnelles sur la bulle de gaz,

- en ce qu'au cours de l'étape (d), on détermine des instants d'émission des ondes acoustiques impulsionnelles par les différents transducteurs de tir impulsionnel de façon que chaque onde impulsionnelle générée par les transducteurs de tir impulsionnel parvienne sur la bulle de gaz soit au cours d'une phase de contraction si l'onde impulsionnelle est une onde de compression, soit au cours d'une phase d'expansion si l'onde impulsionnelle est une onde de dilatation,
- et en ce qu'au cours de l'étape (e), on fait générer l'onde acoustique impulsionnelle par les transducteurs de tir impulsionnel aux instants d'émission respectifs déterminés à l'étape (d), avec une deuxième amplitude supérieure à la première amplitude.

Grâce à ces dispositions, on obtient ainsi une nette augmentation de l'énergie émise par la bulle de gaz sous forme de photons, pour une énergie donnée de l'onde acoustique impulsionnelle. De plus, la deuxième amplitude de l'onde acoustique impulsionnelle peut le cas échéant être très supérieure à 0,14 MPa (1,4 bar) sans pour autant détruire la bulle de gaz avant son émission de photons.

Dans des modes de réalisation préférés de l'invention, on peut éventuellement avoir recours en outre à l'une et/ou à l'autre des dispositions suivante :

- l'étape (c) comporte les sous-étapes suivantes :

(c1) on fait émettre une onde acoustique impulsionnelle successivement par chaque transducteur de tir impulsionnel, avec ladite première amplitude,
(c2) après chaque émission d'onde acoustique impulsionnelle, on fait mesurer par chaque transducteur de tir impulsionnel les signaux acoustiques $s3_{ij}(t)$ générés par la propagation de ladite onde acoustique impulsionnelle dans le réservoir de liquide et on mémorise lesdits signaux mesurés, i et j étant des indices désignant respectivement le transducteur de tir impulsionnel ayant émis l'onde acoustique impulsionnelle et le transducteur de tir impulsionnel ayant reçu l'onde acoustique impulsionnelle correspondant à chaque signal mesuré $s3_{ij}(t)$,

(c3) on détermine, au moins à partir desdits signaux mesurés $s3_{ij}(t)$, lesdits décalages temporels à appliquer respectivement aux ondes acoustiques impulsionnelles générées par les différents transducteurs de tir impulsionnel, pour focaliser lesdites ondes acoustiques impulsionnelles sur la bulle de gaz ;

- au cours de la sous-étape (c3), on détermine des temps de trajet des ondes acoustiques impulsionnelles entre chaque transducteur de tir impulsionnel et la bulle de gaz, et on en déduit lesdits décalages temporels à appliquer respectivement aux ondes acoustiques impulsionnelles générées par les différents transducteurs de tir impulsionnel pour focaliser lesdites ondes acoustiques impulsionnelles sur la bulle de gaz ;
- on réalise une étape préliminaire d'étalonnage (a0), au moins avant l'étape (b), cette étape d'étalonnage comprenant les sous-étapes suivantes :

   (a01) on fait émettre une onde acoustique impulsionnelle successivement par chaque transducteur de tir impulsionnel, avec ladite première amplitude,

   (a02) après chaque émission d'onde acoustique impulsionnelle, on fait mesurer par chaque transducteur de tir impulsionnel des signaux acoustiques $s1_{ij}(t)$ générés par la propagation de ladite onde acoustique impulsionnelle dans le réservoir de liquide et on mémorise lesdits signaux mesurés $s1_{ij}(t)$,

   au cours de l'étape (c), on fait écouter par chaque transducteur de tir impulsionnel des signaux acoustiques $s2_j(t)$ reçus pendant l'émission de l'onde acoustique stationnaire en présence de la bulle de gaz,
   et au cours de la sous-étape (c3), on calcule des signaux corrigés $s_{ij}(t) = s3_{ij}(t) - s1_{ij}(t) - s2_j(t)$, puis on détermine lesdits décalages temporels à partir desdits signaux corrigés ;
- on détermine lesdits décalages temporels par intercorrélation entre lesdits signaux corrigés ;
- n est au moins égal à 8 ;
- les ondes acoustiques impulsionnelles sont des ondes acoustiques impulsionnelles de compression et cours de l'étape (d), on détermine des instants d'émission des ondes acoustiques impulsionnelles de compression (S2) par les différents transducteurs de tir impulsionnel (T1-T8) de façon que chaque onde acoustique impulsionnelle de compression (S2) générée par les transducteurs de tir impulsionnel parvienne sur la bulle de gaz (5) au cours d'une phase de contraction ;
- au cours de l'étape (d), on synchronise l'émission des ondes acoustiques impulsionnelles de compression par les différents transducteurs de tir impulsionnel avec le cycle de déformation suivi par la bulle de gaz de façon que lesdites ondes acoustiques impulsionnelles de compression génèrent une surpression dans le liquide entourant la bulle de gaz au moins jusqu'à la fin de ladite phase de contraction ;
- au cours de l'étape (d), on synchronise l'émission des ondes acoustiques impulsionnelles de compression par les différents transducteurs de tir impulsionnel avec le cycle de déformation suivi par la bulle de gaz, de façon que chaque onde acoustique impulsionnelle de compression générée par les transducteurs de tir impulsionnel parvienne sur la bulle de gaz sensiblement lorsque le bulle de gaz présente un diamètre maximal ;
- les ondes acoustiques impulsionnelles de compression génèrent une vibration acoustique d'amplitude au moins égale à 8 bar dans le liquide au voisinage de la bulle de gaz ;
- au cours de l'étape (e), on fait immédiatement précéder l'onde acoustique impulsionnelle de compression provenant de chaque transducteur de tir impulsionnel, par une onde acoustique impulsionnelle de dilatation qui est adaptée pour parvenir sur la bulle de gaz au cours de la phase d'expansion précédant la phase de contraction où ladite bulle de gaz reçoit les ondes acoustiques impulsionnelles de compression ;
- on fait générer l'onde acoustique stationnaire par au moins deux transducteurs de génération d'onde stationnaire distincts des transducteurs de tir impulsionnel ;
- l'onde acoustique stationnaire est une onde ultrasonore de fréquence comprise entre 20 et 30 kHz et d'amplitude voisine de 0,13 MPa (1,3 bar).

D'autres caractéristiques et avantages de l'invention apparaîtront au cours de la description suivante d'une de ses formes de réalisation, donnée à titre d'exemple non limitatif, en regard des dessins joints.

Sur les dessins :

- la figure 1 est une vue en perspective d'un exemple de dispositif permettant de mettre en oeuvre le procédé selon l'invention,
- la figure 2 est une vue de dessus du dispositif de la figure 1,
- la figure 3 est une vue en coupe selon la ligne III-III de la figure 2,

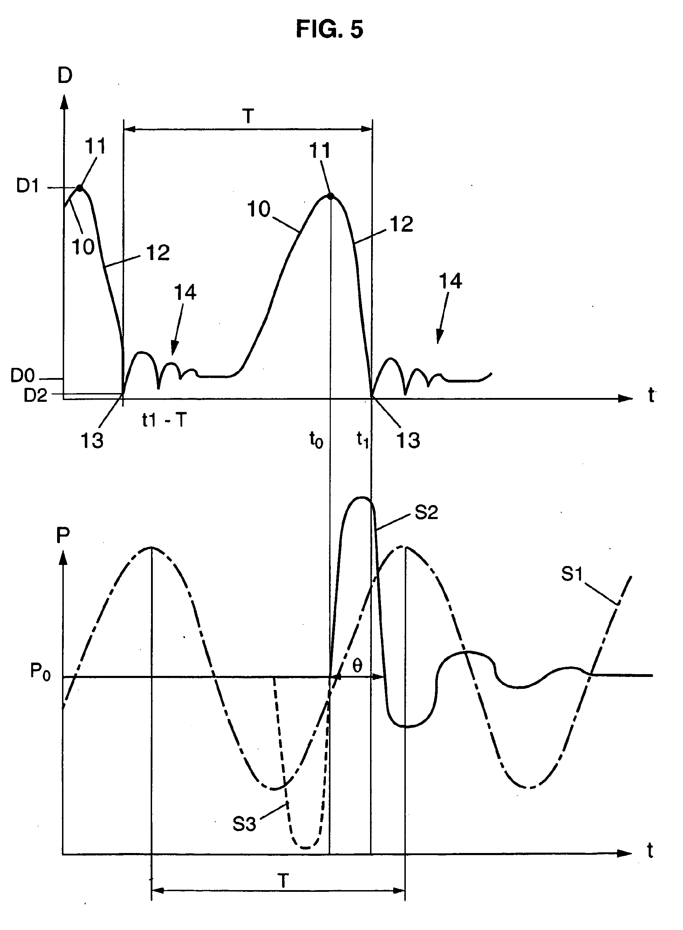

- la figure 4 est un schéma-bloc illustrant le système de commande du dispositif des figures 1 à 3,
- et la figure 5 représente d'une part, le diamètre P de la bulle de gaz contenue dans le dispositif des figures 1 à 3, au cours du temps t, et d'autre part, la pression P générée par l'onde acoustique stationnaire S1 et par les ondes acoustiques impulsionnelles S2 au cours du

temps t au voisinage de la bulle de gaz (les courbes représentées sur la figure 5 ne sont pas à l'échelle et ne donnent qu'une indication schématique sur l'évolution du diamètre P et des pressions P au cours du temps).

Sur les différentes figures, les mêmes références désignent des éléments identiques ou similaires.

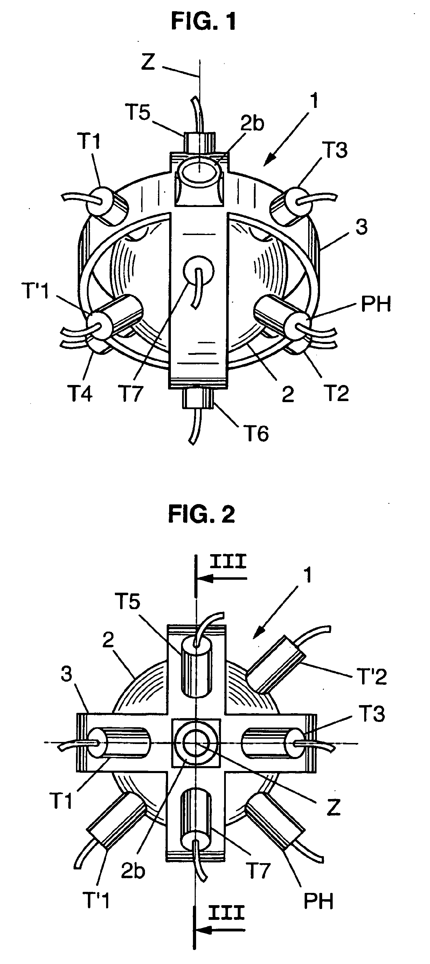

Les figures 1 à 3 représentent un exemple de dispositif de sonoluminescence 1 qui comporte un réservoir 2 tel qu'un ballon de verre rempli d'eau, autour duquel sont disposés deux transducteurs ultrasonores basse fréquence T'1 et T'2 et huit transducteurs ultrasonores haute fréquence T1-T8 (ou transducteurs de tir impulsionnel), ainsi qu'un photomultiplicateur PH.

Dans l'exemple représenté, les huit transducteurs ultrasonores haute fréquence T1-T8 sont supportés par une armature métallique rigide 3 qui supporte également le réservoir 2.

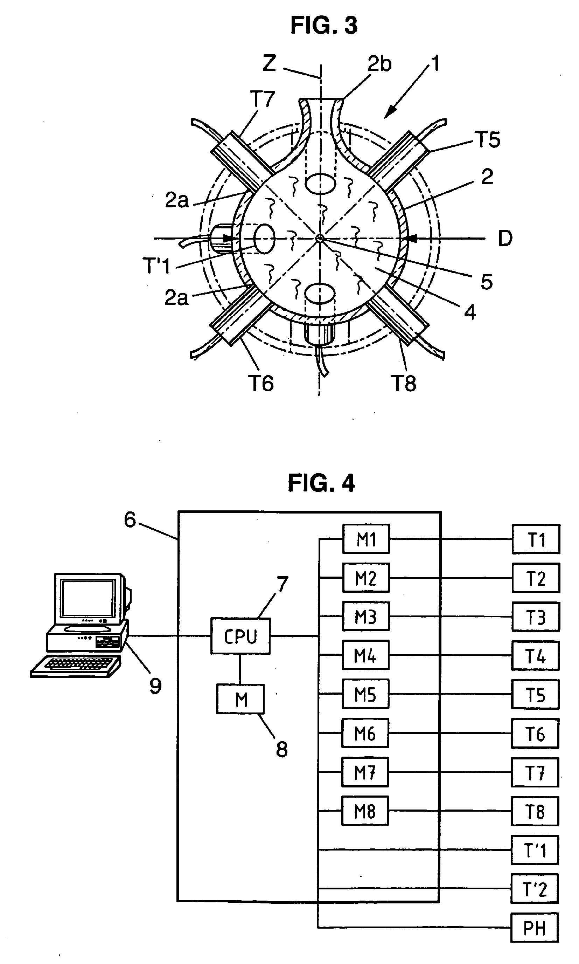

Avantageusement, les différents transducteurs T1-T8, T'1, T'2 sont engagés de façon étanche dans des orifices 2a ménagés dans la paroi du réservoir 2 (voir figure 3), de façon à optimiser l'efficacité de ces transducteurs.

Les deux transducteurs basse fréquence T'1, T'2 sont des transducteurs piézoélectriques adaptés par émettre une onde ultrasonore sinusoïdale à une fréquence comprise entre 20 et 30 kHz, avantageusement d'environ 25 kHz.

Le réservoir 2 présente en l'occurrence une forme sensiblement sphérique et comporte un col supérieur 2b centré sur un axe vertical Z. Ce réservoir 2 présente un diamètre D tel qu'il forme une cavité résonante adaptée à la fréquence des transducteurs basse fréquence T'1, T'2. Bien entendu, le réservoir 2 pourrait présenter une forme différente, par exemple une forme cylindrique ou parallélépipédique.

Dans l'exemple considéré, le diamètre D du réservoir 2 peut être égal par exemple à 6 cm, de façon que le centre du réservoir 2 forme un ventre de vibration pour l'onde acoustique stationnaire généré par les transducteurs T'1, T'2.

Ainsi, lorsque le réservoir 2 est rempli de liquide, par exemple de l'eau dégazée, et lorsqu'on introduit une bulle de gaz dans le réservoir 2 au voisinage de son centre (par exemple, au moyen d'une seringue), cette bulle 5 reste piégée au niveau du ventre de vibration, c'est-à-dire au centre du réservoir (voir figure 3). Le gaz contenu dans la bulle 5 peut être par exemple de l'air, ou encore du deutérium, ou autre.

De préférence, les transducteurs T'1, T'2 génèrent une onde acoustique stationnaire ayant une amplitude suffisante pour que la bulle de gaz 5 émette cycliquement des photons par sonoluminescence, comme il sera expliqué ci-après.

L'intensité lumineuse des émissions de photons peut être mesurée au moyen du photomultiplicateur PH.

Par ailleurs, les huit transducteurs acoustiques haute fréquence T1-T8 sont répartis spacialement autour du centre du réservoir 2, c'est-à-dire autour de la position de la bulle de gaz 5, et sont dirigés vers ladite bulle de gaz.

Dans l'exemple considéré, ces huit transducteurs haute fréquence sont disposés dans deux plans verticaux perpendiculaires l'un à l'autre et contenant chacun l'axe Z, ces deux plans étant disposés chacun à 45° par rapport à la direction commune des transducteurs basse fréquence T'1, T'2.

De plus, toujours dans l'exemple considéré, les transducteurs haute fréquence T1-T8 sont disposés par paires de transducteurs haute fréquence diamétralement opposés, la direction commune de chaque paire de transducteurs haute fréquence diamétralement opposés T1-T2, T3-T4, T5-T6, T7-T8 étant disposée à 45° par rapport à l'axe Z.

De plus, l'axe commun de chaque paire de transducteurs haute fréquence diamétralement opposés est perpendiculaire à l'axe commun de l'autre paire de transducteurs haute fréquence diamétralement opposés, appartenant au même plan vertical.

Bien entendu, d'autres dispositions peuvent être adoptées pour les transducteurs haute fréquence T1-T8 pourvu qu'ils soient spacialement répartis autour de la bulle de gaz 5. Par ailleurs, le nombre de transducteurs haute fréquence pourrait être différent de huit. Ainsi, il serait possible de mettre en oeuvre la présente invention avec au moins deux transducteurs haute fréquence diamétralement opposés, ou avec au moins quatre transducteurs haute fréquence orientés de façon convergente vers la bulle de gaz 5. De plus, le nombre de transducteurs haute fréquence pourrait également être supérieur à huit.

Les transducteurs haute fréquence utilisés dans l'exemple considéré ici sont des transducteurs piézoélectriques présentant une fréquence d'émission de 700 kHz, et sont adaptés pour émettre une onde acoustique impulsionnelle de compression.

Comme représenté sur la figure 4, les différents transducteurs T1-T8, T'1, T'2, sont reliés à un dispositif de commande qui, dans l'exemple considéré ici, comprend une baie électronique 6 pouvant elle-même être contrôlé par un micro-ordinateur 9. La baie électronique 6 comporte une unité centrale électronique 7 (CPU) associée à une mémoire centrale 8 (M) et adaptée pour commander les transducteurs basse fréquence T'1, T'2 et pour recevoir les mesures du photomultiplicateur PH (l'unité centrale 8 peut ainsi déterminer, au moyen de son horloge interne ou d'une horloge externe, les instants d'émission des flashes lumineux par la bulle de gaz 5 pendant le déroulement du phénomène de sonoluminescence). De plus, l'unité centrale 7 est également reliée, par l'intermédiaire de mémoires tampons M1-M8, aux transducteurs haute fréquence T1-T8, de façon à pouvoir commander ces transducteurs et de façon que les signaux captés par lesdits transducteurs lorsqu'ils fonctionnent en réception, puissent être stockés dans les mémoires M1-M8.

Le dispositif qui vient d'être décrit fonctionne comme suit.

En premier lieu, avant l'introduction de la bulle de gaz 5 dans le réservoir 2, on procède à une étape initiale d'étalonnage, de préférence avec les transducteurs basse fréquence T'1, T'2 en fonctionnement. Au cours de cette étape d'étalonnage, on fait successivement émettre, par chacun des transducteurs haute fréquence T1-T8, une onde acoustique impulsionnelle de compression présentant une première amplitude relativement faible (par exemple environ 30kPa), et on fait mesurer le signal acoustique résultant par tous les transducteurs haute fréquence T1-T8. Les 64 signaux $s1_{ij}(t)$ ainsi mesurés sont stockés dans les mémoires M1-M8 (les indices i désignant respectivement les transducteurs ayant émis chaque onde impulsionnelle et les indices j désignant respectivement les transducteurs ayant reçu chaque onde impulsionnelle).

Par la suite, on introduit la bulle de gaz 5 dans le réservoir 2 tandis que les transducteurs basse fréquence T'1, T'2 continuent à générer l'onde acoustique stationnaire basse fréquence susmentionnée, qui se traduit par un signal de pression sinusoïdal S1 au niveau de la bulle 5, comme représenté sur la figure 5. Sous l'effet de cette onde stationnaire, la bulle de gaz 5 se stabilise au centre du réservoir 2, de sorte que ladite bulle est sensiblement équidistante des différents transducteurs T1-T8, T'1, T'2 dans l'exemple considéré.

L'amplitude de cette onde stationnaire est de préférence de l'ordre de 0,13 MPa (1,3 bar) dans le liquide au voisinage de la bulle de gaz 5, de sorte que la bulle de gaz 5 émet des photons par sonoluminescence, du fait des déformations qui lui sont imposées par l'onde acoustique stationnaire. Comme représenté sur la figure 5, le diamètre D de la bulle de gaz 5 varie en effet fortement entre un diamètre maximum D1 qui peut être par exemple de l'ordre de 30 μm à 80 μm pour un diamètre au repos D0 de l'ordre de 3 μm, et un diamètre minimum D2 qui peut être de l'ordre de 0,5 μm dans l'exemple considéré.

Ces variations de diamètre se font selon un cycle périodique de même période T que l'onde sinusoïdale stationnaire S1, avec des phases alternées d'expansion 10 où la courbe D(t) monte jusqu'à un sommet 11, puis de contraction 12 où la courbe D(t) chute brutalement jusqu'à un point de rebroussement 13 au diamètre minimum D2, ce point de rebroussement étant suivi généralement par un certain nombre de rebonds 14 avant le début de la phase d'expansion suivante 10.

L'émission de photons par le gaz contenu dans la bulle 5 se fait à la fin de chaque phase de contraction 13, pendant une très brève période d'une durée comprise par exemple entre 10 et 300 ps suivant le cas, sous l'effet de la densification soudaine de la matière au sein de la bulle 5 et de l'augmentation parallèle de la température et de la pression dans ladite bulle de gaz 5, cette augmentation de température et de pression étant suffisante pour créer temporairement un plasma dans la bulle de gaz. Ces flashes lumineux sont émis par la bulle de gaz 5 avec une régularité parfaite, avec la même période T que l'onde acoustique stationnaire.

Une fois la bulle de gaz 5 stabilisée au centre du réservoir 2, on procède à une étape d'apprentissage de focalisation.

Au cours de cette étape d'apprentissage de focalisation, on fait mesurer par chaque transducteur Ti le signal $s2_i(t)$ qu'il reçoit du fait des ondes acoustiques stationnaires en présence de la bulle de gaz 5.

Cette mesure est effectuée dans un créneau temporel de durée T0 et débutant pour chaque transducteur Ti à un instant $t0i = t0 + \Delta\tau_i 0$, où :

- t0 est un instant où le diamètre de la bulle de gaz est maximal (cet instant est connu par la mesure des instants t1 d'émission des flashes lumineux par la bulle de gaz 5, et par la forme de la courbe D(t) qui est connue à l'avance).
- et $\Delta\tau_i 0$ est une première approximation du temps de trajet de l'onde acoustique impulsionnelle entre le transducteur Ti et la bulle de gaz 5 (dans l'exemple considéré, où le réservoir 2 est sphérique et la bulle 5 est au centre de la sphère de rayon R, tous les temps $\Delta\tau_i 0$ peuvent être pris égaux à R/c, où c est la célérité de l'onde acoustique dans le liquide qui remplit le réservoir 2).

Après chaque période d'écoute par un transducteur Ti, on fait émettre par le même transducteur Ti une onde impulsionnelle de compression S2 (voir figure 5) avec ladite première amplitude, qui est suffisamment faible (par exemple 30kPa) pour ne pas déplacer la bulle 5 ou perturber ses déformations cycliques. Cette émission est faite de façon que l'onde impulsionnelle parvienne sur la bulle de gaz 5 à un instant où son diamètre D est maximal, de façon à maximiser le signal de retour réfléchi par la bulle de gaz (autrement dit, le transducteur Ti émet son onde acoustique impulsionnelle à un instant $t0 + k.T - \Delta\tau_i 0$, où k est un entier naturel non nul [k peut par exemple être égal à 2] et T est la période de l'onde acoustique stationnaire).

On mesure alors le signal acoustique résultant $s3_{ij}(t)$ au niveau de chaque transducteur haute fréquence Tj pendant un créneau temporel de durée T0 et débutant à l'instant $t0'i = t0i + k.T$, et on mémorise le signal mesuré $s3_{ij}(t)$ dans la mémoire tampon correspondante Mj.

Les mêmes mesures de signaux $s2_i(t)$, $s3_{ij}(t)$ sont effectuées successivement pour tous les transducteurs Ti, en laissant passer un temps de relaxation Tr suffisant entre chaque tir d'onde acoustique impulsionnelle par un transducteur Ti et la mesure du signal $s2_{i+1}(t)$ pour le transducteur suivant Ti+1.

Ce temps de relaxation Tr peut être par exemple de l'ordre de 150 ms dans l'exemple considéré ici, ou plus généralement être supérieur ou égal à Q.T, où Q est le facteur de qualité de la cavité acoustique formée par le réservoir 2 rempli de liquide et T est la période des ondes acoustiques stationnaire.

Ces différents signaux $s2_i(t)$, $s3_{ij}(t)$ ont tous la même durée T0 et sont en phase par rapport à la réflexion ou à l'émission des ondes acoustiques par la bulle de gaz 5. Par souci de simplification, t pourra être pris égal à 0 au début de chaque créneau temporel, de sorte que tous les signaux $s2_i(t)$, $s3_{ij}(t)$ débutent à t = 0 et se terminent à t = T0.

Pour être cohérents avec les signaux $s22_i(t)$, $s3_{ij}(t)$, les signaux $s1_{ij}(t)$ précédemment mesurés pourront eux aussi être mesurés dans des créneaux temporels débutant $2 . \Delta\tau_i0$ après l'émission de l'onde acoustique impulsionnelle par chaque transducteur Ti, et par convention, t pourra également être pris égal à 0 au début de chaque créneau temporel, de sorte que tous les signaux $s1_{ij}(t)$ débutent à t = 0 et se terminent à t = T0.

Lorsque tous ces signaux acoustiques ont été mesurés, on obtient 64 signaux temporels $s3_{ij}(t)$, dont on soustrait les signaux temporels $s1_{ij}(t)$ et $s2_j(t)$ précédemment mesurés, pour obtenir ainsi des signaux $s_{ij}(t) = s3_{ij}(t) - s1_{ij}(t) - s2_j(t)$, où i est l'indice du transducteur Ti d'émission du signal et j l'indice du transducteur Tj de réception du signal.

Bien entendu, il serait possible dans un premier temps de mesurer simultanément ou quasi-simultanément tous les signaux $s2_i(t)$ dans des créneaux temporels débutant à des instants $t0i = t0 + \Delta\tau_i0$ (les instants ti0 pouvant éventuellement être confondus si tous les transducteurs sont équidistants de la bulle) et de durée T0, puis de mesurer successivement les signaux $s3_{ij}(t)$ dans des créneaux temporels de durée T0 et débutant à t0i + k1.T, t0i + k2.T, t0i + k3.T, etc.

Une fois déterminés les signaux $s_{ij}(t)$, on en déduit par un procédé d'intercorrélation, ou par tout autre procédé connu, le temps de trajet exact des ondes ultrasonores impulsionnelles $\Delta\tau_i$ entre chaque transducteur haute fréquence Ti et la bulle de gaz 5, pour la position précise occupée par la bulle de gaz.

A titre d'exemple non limitatif, on peut par exemple calculer les fonctions d'intercorrélation suivantes :

$$C_{ij}(\tau) = \int s_{ij}(t) * s_r(\tau + t)dt \; ,$$

où i et j sont des indices compris entre 1 et 8 dans l'exemple considéré, désignant les transducteurs T1-T8, et $s_r(t)$ est un signal temporel de référence, correspondant par exemple à la réponse d'un transducteur de tir impulsionnel en émission-réception.

A titre d'exemple, on peut mesurer $s_r(t)$ une fois pour toutes en faisant tirer une impulsion acoustique par l'un des transducteurs T1-T8 dans la liquide en l'absence de bulle 5, et en faisant mesurer le signal acoustique reçu par le transducteur T1-T8 diamétralement opposé, ce signal étant multiplié par -1 pour constituer le signal de référence $s_r(t)$. A cette occasion, on mesure également le temps $\Delta T$ séparant le début de l'émission de l'impulsion acoustique par le premier transducteur et le début de sa réception par le transducteur diamétralement opposé.

Après avoir calculé les fonctions d'intercorrélation $C_{ij}(\tau)$, on détermine les valeurs de $\tau ij$ qui maximisent respectivement ces fonctions (cette optimisation peut par exemple être considérée comme effectuée lorsque les fonctions d'intercorrélation ont chacune une valeur supérieure à 0,8), puis on calcule les temps de trajet $\Delta\tau_i$ susmentionnés, par exemple par la formule :

$$\Delta\tau_i = \frac{1}{M} \sum_{j=1}^{M} \frac{\left(\tau_{ij} + \tau_{ji} - \tau_{jj}\right)}{2} + \Delta t \; ,$$

où M est le nombre de transducteurs pris en compte dans ce calcul (on élimine généralement certains transducteurs de ce calcul, notamment ceux qui sont situés en vis-à-vis et ceux pour lesquels l'onde directe arrive en même temps que l'onde diffusée).

Eventuellement, on peut simplifier ce calcul en utilisant la formule : $\Delta\tau_i = \tau_{ii}/2 + \Delta T$.

A partir des temps de trajets $\Delta\tau_i$, on déduit des valeurs de décalage temporel à appliquer aux signaux acoustiques émis par les différents transducteurs haute fréquence T1-T8, de façon que toutes les ondes acoustiques impulsionnelles émises par ces transducteurs haute fréquence arrivent en même temps sur la bulle 5. Ainsi, pour faire arriver toutes les impulsions acoustiques des transducteurs T1-T8 à un instant t0 sur la bulle de gaz, on fera émettre ces impulsions aux instants respectifs t0-$\Delta\tau i$ par les différents transducteurs Ti. Autrement dit, on apprend ainsi à focaliser les ondes acoustiques impulsionnelles émises par les transducteurs T1-T8 sur la bulle 5, dans la position précise occupée par cette bulle 5.

De plus, l'instant t0 d'arrivée des ondes impulsionnelles sur la bulle de gaz 5 est déterminé pour coïncider avec une phase de contraction de la bulle.

Cette synchronisation peut être effectuée en détectant les instants d'émissions t1 des flashes lumineux par la bulle de gaz 5 sous l'effet de l'onde acoustique stationnaire. En effet, cette émission de flashes est parfaitement régulière, de sorte qu'en ayant déterminé un instant t1, on sait que les émissions ultérieures de flashes auront lieu à des instants t1 + n.T, où n est un entier naturel et T est la période de l'onde acoustique stationnaire. De plus, la courbe D(t) donnant le diamètre de la bulle de gaz 5 en fonction du temps est elle-même parfaitement connue et répétitive, de sorte que la connaissance de l'instant t1 permet de connaître cette courbe. On peut donc déterminer l'instant t0 auquel on souhaite que les ondes impulsionnelles de compression émises par les transducteurs T1-T8 arrivent simultanément sur la bulle 5.

Avantageusement, cet instant t0 pourra être choisi pour correspondre à un maximum de la courbe D(t) représentée sur la figure 5.

La durée θ de l'impulsion ultrasonore de compression étant connue (par exemple, de l'ordre de 700 ns), on pourra également choisir l'instant t0 de façon que le signal S2 génère une compression de la bulle 5 pendant la majeure partie de la phase de contraction 12 de cette bulle et de façon que la surpression ainsi générée se poursuive au moins jusqu'à l'instant t1 d'émission lumineuse.

Une fois l'instant t0 déterminé, on peut déclencher un tir d'impulsions ultrasonores de compression S2 par les différents transducteurs T1-T8, avec une deuxième amplitude très supérieure à la première amplitude, aux instants respectifs t0-$\Delta\tau_i$. Par exemple, l'amplitude totale de variation de pression dans le liquide au voisinage de la bulle 5 peut être alors d'environ 0,8 MPa (8 bars), voire beaucoup plus.

Grâce à la focalisation des ondes impulsionnelles ainsi émises, la bulle de gaz 5 n'est pas détruite. De plus, on observe une augmentation importante de l'intensité lumineuse émise par la bulle de gaz 5 au moment de l'application de l'impulsion ultrasonore de compression. A titre d'exemple, pour une amplitude d'impulsion ultrasonore de compression de l'ordre de 0,8 MPa (8 bars) dans le liquide au voisinage de la bulle de gaz 5, on observe une augmentation d'un facteur 2 de l'intensité lumineuse émise par sonoluminescence, par rapport à l'intensité émise en présence de la seule onde acoustique stationnaire.

On notera qu'il serait possible d'augmenter encore la production d'énergie de la bulle de gaz 5 par sonoluminescence, en augmentant l'amplitude de l'impulsion ultrasonore de compression, ce qui peut être obtenu en augmentant la puissance des transducteurs haute fréquence T1-T8 et/ou le nombre de ces transducteurs.

De plus, on peut encore augmenter l'énergie émise par sonoluminescence en faisant précéder immédiatement l'impulsion ultrasonore de compression S2 par une impulsion ultrasonore de dilatation S3, c'est-à-dire une chute brutale de pression en dessous de la pression statique P0 régnant dans le réservoir 2 (voir figure 5) pendant la phase d'expansion 10 de la bulle de gaz 5 qui précède immédiatement la phase de contraction 12 au cours de laquelle on applique l'impulsion ultrasonore de compression S2. Bien entendu, les impulsions S2 et S3 peuvent être émises par les mêmes transducteurs T1-T8.

On notera que, le cas échéant les transducteurs T'1, T'2 pourraient être supprimés, les transducteurs T1-T8 servant alors à la fois :

- à générer une onde stationnaire qui maintient en position la bulle de gaz 5 et fait varier cycliquement son diamètre,
- et à générer des ondes impulsionnelles de compression et/ou de dilatation.

Par ailleurs, on notera également qu'il serait possible de stabiliser la bulle de gaz 5 ailleurs qu'au centre du réservoir 2, par exemple au voisinage de ses parois, en utilisant une géométrie du réservoir 2 et/ou des formes d'ondes appropriées pour créer des ventres de vibration acoustiques à l'emplacement voulu.

Il serait également possible de stabiliser plusieurs bulles de gaz 5 dans le réservoir 2, toujours en choisissant une géométrie adaptée du réservoir 2 et/ou des formes d'ondes adéquates, auquel cas les transducteurs T1-T8 pourraient être commandés pour se focaliser successivement et/ou simultanément sur les différentes bulles de gaz 5.

Enfin, on pourrait éventuellement remplacer entièrement les ondes impulsionnelles de compression S2 par les ondes impulsionnelles de dilatation S3 susmentionnées, synchronisées avec le cycle de déformation de la bulle de gaz 5 pour arriver sur ladite bulle de gaz au cours d'une phase d'expansion.

**Revendications**

1. Procédé pour générer des photons par sonoluminescence, comprenant au moins les étapes suivantes :

   (a) générer au moins une onde acoustique stationnaire (S1) dans un réservoir de liquide (2), cette onde acoustique stationnaire présentant au moins un ventre de vibration,
   (b) piéger au moins une bulle de gaz (5) dans le liquide au niveau dudit ventre de vibration de l'onde acoustique stationnaire, cette bulle de gaz subissant alors un cycle de déformation périodique comprenant alternativement des phases d'expansion (10) et des phases de contraction (12),
   (e) et générer des ondes acoustiques impulsionnelles (S2) dans le liquide, ces ondes acoustiques impulsionnelles se superposant à l'onde acoustique stationnaire (S1) et faisant émettre des photons par la bulle de gaz, par sonoluminescence,

   **caractérisé en ce qu'**on fait émettre les ondes acoustiques impulsionnelles (S2) par un nombre n au moins égal à 2 de transducteurs de tir impulsionnel (T1-T8), disposés autour de la bulle de gaz (5), **en ce qu'**entre les étapes (b) et (e) sont intercalées une étape (c) d'apprentissage de focalisation et une étape (d) de synchronisation,

**en ce qu'**au cours de l'étape (c) d'apprentissage de focalisation, on fait émettre des ondes acoustiques impulsionnelles (S2) par les transducteurs de tir impulsionnel, avec une première amplitude suffisamment faible pour ne pas perturber sensiblement la position et le cycle de déformation de la bulle de gaz (5), on mesure des signaux acoustiques générés par lesdites ondes acoustiques impulsionnelles dans le réservoir de liquide et on en déduit des décalages temporels à appliquer respectivement aux ondes acoustiques impulsionnelles générées par les différents transducteurs de tir impulsionnel (T1-T8) pour obtenir une focalisation desdites ondes acoustiques impulsionnelles sur la bulle de gaz (5),

**en ce qu'**au cours de l'étape (d), on détermine des instants d'émission des ondes acoustiques impulsionnelles (S2) par les différents transducteurs de tir impulsionnel (T1-T8) de façon que chaque onde impulsionnelle (S2) générée par les transducteurs de tir impulsionnel parvienne sur la bulle de gaz (5) soit au cours d'une phase de contraction si l'onde impulsionnelle est une onde de compression, soit au cours d'une phase d'expansion si l'onde impulsionnelle est une onde de dilatation,

et **en ce qu'**au cours de l'étape (e), on fait générer l'onde acoustique impulsionnelle par les transducteurs de tir impulsionnel (T1-T8) aux instants d'émission respectifs déterminés à l'étape (d), avec une deuxième amplitude supérieure à la première amplitude.

2. Procédé selon la revendication 1, dans lequel l'étape (c) comporte les sous-étapes suivantes :

(c1) on fait émettre une onde acoustique impulsionnelle (S2) successivement par chaque transducteur de tir impulsionnel (T1-T8), avec ladite première amplitude,
(c2) après chaque émission d'onde acoustique impulsionnelle, on fait mesurer par chaque transducteur de tir impulsionnel (T1-T8) les signaux acoustiques $s3_{ij}(t)$ générés par la propagation de ladite onde acoustique impulsionnelle dans le réservoir de liquide (2) et on mémorise lesdits signaux mesurés, i et j étant des indices désignant respectivement le transducteur de tir impulsionnel ayant émis l'onde acoustique impulsionnelle et le transducteur de tir impulsionnel ayant reçu l'onde acoustique impulsionnelle correspondant à chaque signal mesuré $s3_{ij}(t)$,
(c3) on détermine, au moins à partir desdits signaux mesurés $s3_{ij}(t)$, lesdits décalages temporels à appliquer respectivement aux ondes acoustiques impulsionnelles générées par les différents transducteurs de tir impulsionnel (T1-T8), pour focaliser lesdites ondes acoustiques impulsionnelles sur la bulle de gaz (5).

3. Procédé selon la revendication 2, dans lequel au cours de la sous-étape (c3), on détermine des temps de trajet des ondes acoustiques impulsionnelles entre chaque transducteur de tir impulsionnel (T1-T8) et la bulle de gaz, et on en déduit lesdits décalages temporels à appliquer respectivement aux ondes acoustiques impulsionnelles générées par les différents transducteurs de tir impulsionnel, pour focaliser lesdites ondes acoustiques impulsionnelles sur la bulle de gaz.

4. Procédé selon l'une quelconque des revendications 2 et 3, dans lequel on réalise une étape préliminaire d'étalonnage (a0), au moins avant l'étape (b), cette étape d'étalonnage comprenant les sous-étapes suivantes :

(a01) on fait émettre une onde acoustique impulsionnelle (S2) successivement par chaque transducteur de tir impulsionnel (T1-T8), avec ladite première amplitude,
(a02) après chaque émission d'onde acoustique impulsionnelle, on fait mesurer par chaque transducteur de tir impulsionnel (T1-T8) des signaux acoustiques $s1_{ij}(t)$ générés par la propagation de ladite onde acoustique impulsionnelle dans le réservoir de liquide (2) et on mémorise lesdits signaux mesurés $s1_{ij}(t)$,

au cours de l'étape (c), on fait écouter par chaque transducteur de tir impulsionnel (T1-T8) des signaux acoustiques $s2_j(t)$ reçus pendant l'émission de l'onde acoustique stationnaire en présence de la bulle de gaz (5), et au cours de la sous-étape (c3), on calcule des signaux corrigés $s_{ij}(t) = s3_{ij}(t) - s1_{ij}(t) - s2_j(t)$, puis on détermine lesdits décalages temporels à partir desdits signaux corrigés.

5. Procédé selon la revendication 4, dans lequel on détermine lesdits décalages temporels par intercorrélation entre lesdits signaux corrigés.

6. Procédé selon l'une quelconque des revendications précédentes, dans lequel n est au moins égal à 8.

7. Procédé selon l'une quelconque des revendications précédentes, dans lequel les ondes acoustiques impulsionnelles (S2) sont des ondes acoustiques impulsionnelles de compression et au cours de l'étape (d), on détermine des instants d'émission des ondes acoustiques impulsionnelles de compression par les différents transducteurs de tir impulsionnel (T1-T8) de façon que chaque onde acoustique impulsionnelle de compression générée par les transducteurs de tir impulsionnel parvienne sur la bulle de gaz (5) au cours d'une phase de contraction.

**8.** Procédé selon la revendication 7 dans lequel au cours de l'étape (d), on synchronise l'émission des ondes acoustiques impulsionnelles de compression par les différents transducteurs de tir impulsionnel avec le cycle de déformation suivi par la bulle de gaz de façon que lesdites ondes acoustiques impulsionnelles de compression génèrent une surpression dans le liquide entourant la bulle de gaz au moins jusqu'à la fin de ladite phase de contraction.

**9.** Procédé selon l'une quelconque des revendications 7 et 8, dans lequel au cours de l'étape (d), on synchronise l'émission des ondes acoustiques impulsionnelles de compression par les différents transducteurs de tir impulsionnel (T1-T8) avec le cycle de déformation suivi par la bulle de gaz, de façon que chaque onde acoustique impulsionnelle de compression générée par les transducteurs de tir impulsionnel parvienne sur la bulle de gaz (5) sensiblement lorsque ladite bulle de gaz présente un diamètre maximal.

**10.** Procédé selon l'une quelconque des revendications 7 à 9, dans lequel les ondes acoustiques impulsionnelles de compression génèrent une vibration acoustique d'amplitude au moins égale à 0,8 MPa (8 bar) dans le liquide au voisinage de la bulle de gaz (5).

**11.** Procédé selon l'une quelconque des revendications 7 à 10, dans lequel au cours de l'étape (e), on fait immédiatement précéder l'onde acoustique impulsionnelle de compression provenant de chaque transducteur de tir impulsionnel (T1-T8), par une onde acoustique impulsionnelle de dilatation (S3) qui est adaptée pour parvenir sur la bulle de gaz (5) au cours de la phase d'expansion (10) précédant la phase de contraction (12) où ladite bulle de gaz reçoit les ondes acoustiques impulsionnelles de compression.

**12.** Procédé selon l'une quelconque des revendications précédentes, dans lequel on fait générer l'onde acoustique stationnaire (S1) par au moins deux transducteurs de génération d'onde stationnaire (T'1, T'2) distincts des transducteurs de tir impulsionnel (T1-T8).

**13.** Procédé selon l'une quelconque des revendications précédentes, dans lequel l'onde acoustique stationnaire (S1) est une onde ultrasonore de fréquence comprise entre 20 et 30 kHz et d'amplitude voisine de 0,13 MPa (1,3 bar).

**Claims**

**1.** A method of generating photons by sonoluminescence, said method comprising at least the following steps:

(a) generating at least one standing acoustic wave (S1) in a liquid reservoir (2), said standing acoustic wave having at least one antinode;
(b) trapping at least one gas bubble (5) in the liquid at said antinode of the standing acoustic wave, said gas bubble then being subjected to a periodic deformation cycle comprising expansion stages (10) and contraction stages (12) in alternation; and
(e) generating acoustic wave impulses (S2) in the liquid, which acoustic wave impulses are superposed on the standing acoustic wave (S1), and cause photons to be emitted by the gas bubble, by sonoluminescence;

said method being **characterized in that** the acoustic wave impulses (S2) are caused to be emitted by a number n at least equal to 2 of impulse firing transducers (T1-T8) disposed around the gas bubble (5);
**in that** a focusing training step (c) and a synchronization step (d) are interposed between the steps (b) and (e); and
**in that**, during the focusing training step (c), the impulse firing transducers are caused to emit acoustic wave impulses (S2) with a first amplitude that is sufficiently small to avoid disturbing significantly the position and the deformation cycle of the gas bubble (5), acoustic signals generated by said acoustic wave impulses in the liquid reservoir are measured, and time offsets are deduced therefrom to be applied to respective ones of the acoustic wave impulses generated by the various impulse firing transducers (T1-T8) so as to focus said acoustic wave impulses onto the gas bubble (5);
**in that**, during the step (d), instants at which acoustic wave impulses (S2) are emitted by the various impulse firing transducers (T1-T8) are determined so that each wave impulse (S2) generated by the impulse firing transducers reaches the gas bubble (5) either during a contraction stage if the wave impulse is a compression wave, or during an expansion stage if the wave impulse is an expansion wave; and
**in that**, during the step (e), the impulse firing transducers (T1-T8) are caused to generate the acoustic wave impulses at the respective emit instants determined at the step (d), with a second amplitude that is larger than the first amplitude.

**2.** A method according to claim 1, in which the step (c) comprises the following sub-steps:

(c1) each impulse firing transducer (T1-T8) is caused to emit an acoustic wave impulse (S2) in succession, with said first amplitude;
(c2) after each acoustic wave impulse emission, each impulse firing transducer (T1-T8) is caused to measure the acoustic signals $s3_{ij}(t)$ generated by said acoustic wave impulse propagating in the liquid reservoir (2), and said measured signals are stored, i and j being indices respectively designating the impulse firing transducer that emitted the acoustic wave impulse and the impulse firing transducer that received the acoustic wave impulse corresponding to each measured signal $s3_{ij}(t)$; and

(c3) at least on the basis of said measured signals $s3_{ij}(t)$, said time offsets to be applied to respective ones of the acoustic wave impulses generated by the various impulse firing transducers (T1-T8) are determined so as to focus said acoustic wave impulses onto the gas bubble (5).

3. A method according to claim 2, in which, during the sub-step (c3), travel times taken by the acoustic wave impulses to travel between each impulse firing transducer (T1-T8) and the gas bubble are determined, and said time offsets to be applied to respective ones of the acoustic waves generated by the various impulse firing transducers so as to focus said acoustic wave impulses onto the gas bubble are deduced from said travel times.

4. A method according to claim 2 or claim 3, in which a preliminary calibration step (a0) is performed, at least before the step (b), said calibration step comprising the following sub-steps:

(a01) each impulse firing transducer (T1-T8) is caused to emit an acoustic wave impulse (S2) in succession, with said first amplitude;
(a02) after each acoustic wave impulse emission, each impulse firing transducer (T1-T8) is caused to measure acoustic signals $s1_{ij}(t)$ generated by said acoustic wave impulse propagating in the liquid reservoir (2), and said measured signals $s1_{ij}(t)$ are stored; during step (c) each impulse firing transducer (T1-T8) is caused to listen to the acoustic signals $s2_j(t)$ received while the standing acoustic wave is being emitted in the presence of the gas bubble (5);

and during the sub-step (c3), corrected signals $s_{ij}(t) = s3_{ij}(t) - s1_{ij}(t) - s2_j(t)$ are calculated, and then said time offsets are determined on the basis of said corrected signals.

5. A method according to claim 4, in which said time offsets are determined by cross-correlation between said corrected signals.

6. A method according to any preceding claim, in which n is at least equal to 8.

7. A method according to any preceding claim, in which the acoustic wave impulses (S2) are compression acoustic wave impulses, and, during the step (d), emit instants are determined at which the compression acoustic wave impulses are emitted by the various impulse firing transducers (T1-T8) so that each compression acoustic wave impulse (S2) generated by the impulse firing transducers reaches the gas bubble (5) during a contraction stage.

8. A method according to claim 7, in which, during step (d), emission of the compression acoustic wave impulses by the various impulse firing transducers is synchronized with the deformation cycle followed by the gas bubble so that said compression acoustic wave impulses generate an increase in the pressure of the liquid surrounding the gas bubble at least until the end of said contraction stage.

9. A method according to any one of claims 7 and 8, in which, during step (d), emission of the compression acoustic wave impulses by the various impulse firing transducers (T1-T8) is synchronized with the deformation cycle followed by the gas bubble, so that each compression acoustic wave impulse generated by the impulse firing transducers reaches the gas bubble (5) substantially when said gas bubble has its maximum diameter.

10. A method according to any one of claims 7 to 9, in which the compression acoustic waves generate acoustic vibration of amplitude at least equal to 0.8 MPa (8 bars) in the liquid in the vicinity of the gas bubble (5).

11. A method according to any one of claims 7 to 10, in which, during step (e), the compression acoustic wave impulse (S2) coming from each impulse firing transducer (T1-T8) is caused to be preceded immediately by an expansion acoustic wave impulse (S3) which is adapted to reach the gas bubble (5) during the expansion stage (10) preceding the contraction stage (12) during which said gas bubble receives the compression acoustic wave impulses.

12. A method according to any preceding claim, in which the standing acoustic wave (S1) is caused to be generated by at least two standing wave generation transducers (T'1, T'2) distinct from the impulse firing transducers (T1-T8).

13. A method according to any preceding claim, in which the standing acoustic wave (S1) is an ultrasound wave of frequency lying in the range 20 kHz to 30 kHz and of amplitude in the vicinity of 0.13 MPa (1.3 bars).

**Patentansprüche**

1. Verfahren zum Erzeugen von Photonen durch Sonolumineszenz, welches mindestens die folgenden Schritte umfasst:

   (a) Erzeugen mindestens einer stationären akustischen Welle (S1) in einem Flüssigkeitsbehälter (2), wobei diese stationäre akustische Welle mindestens einen Schwingungsbauch aufweist,
   (b) Einfangen mindestens einer Gasblase (5) in der Flüssigkeit im Bereich des Schwingungsbauches der stationären akustischen Welle, wobei diese Gasblase dann einem Zyklus periodischer Verformung unterworfen wird, der abwechselnd Expansionsphasen (10) und Kontraktionsphasen (12) umfasst,
   (e) und Erzeugen von impulsförmigen akustischen Wellen (S2) in der Flüssigkeit, wobei diese impulsförmigen akustischen Wellen sich der stationären akustischen Welle (S1) überlagern und dabei bewirken, dass durch die Gasblase durch Sonolumineszenz Photonen emittiert werden,

   **dadurch gekennzeichnet, dass** bewirkt wird, dass die impulsförmigen akustischen Wellen (S2) durch eine Anzahl n, die mindestens gleich 2 ist, von Impulsabgabe-Schallgebern (T1-T8) ausgesendet werden, die um die Gasblase (5) herum angeordnet sind,
   **dadurch, dass** zwischen den Schritten (b) und (e) ein Schritt (c) des Lernens der Fokussierung und ein Schritt (d) der Synchronisation zwischengeschaltet sind,
   **dadurch, dass** während des Schrittes (c) des Lernens der Fokussierung bewirkt wird, dass durch die Impulsabgabe-Schallgeber impulsförmige akustische Wellen (S2) ausgesendet werden, mit einer ersten Amplitude, die ausreichend schwach ist, um die Position und den Verformungszyklus der Gasblase (5) im Wesentlichen nicht zu stören, dass akustische Signale gemessen werden, die von den impulsförmigen akustischen Wellen in dem Flüssigkeitsbehälter erzeugt werden, und dass davon zeitliche Verschiebungen abgeleitet werden, die auf die impulsförmigen akustischen Wellen, die durch die verschiedenen Impulsabgabe-Schallgeber (T1-T8) erzeugt werden, jeweils anzuwenden sind, um eine Fokussierung der impulsförmigen akustischen Wellen auf die Gasblase (5) zu erzielen,
   **dadurch, dass** während des Schrittes (d) Zeitpunkte der Aussendung der impulsförmigen akustischen Wellen (S2) durch die verschiedenen Impulsabgabe-Schallgeber (T1-T8) bestimmt werden, derart, dass jede impulsförmige Welle (S2), die durch die Impulsabgabe-Schallgeber erzeugt wird, die Gasblase (5) entweder während einer Kontraktionsphase erreicht, wenn die impulsförmige Welle eine Kompressionswelle ist, oder während einer Expansionsphase, wenn die impulsförmige Welle eine Dilatationswelle ist,
   **und dadurch, dass** während des Schrittes (e) bewirkt wird, dass die impulsförmige akustische Welle durch die Impulsabgabe-Schallgeber (T1-T8) zu den jeweiligen Zeitpunkten der Aussendung, die im Schritt (d) bestimmt wurden, mit einer zweiten Amplitude, die größer als die erste Amplitude ist, erzeugt werden.

2. Verfahren nach Anspruch 1, wobei der Schritt (c) die folgenden Teilschritte umfasst:

   (c1) Es wird bewirkt, dass der Reihe nach durch jeden Impulsabgabe-Schallgeber (T1-T8) eine impulsförmige akustische Welle (S2) mit der ersten Amplitude ausgesendet wird,
   (c2) nach jeder Aussendung einer impulsförmigen akustischen Welle wird bewirkt, dass durch jeden Impulsabgabe-Schallgeber (T1-T8) die akustischen Signale $s3_{ij}(t)$ gemessen werden, die durch die Ausbreitung der impulsförmigen akustischen Welle in dem Flüssigkeitsbehälter (2) erzeugt werden, und die gemessenen Signale werden gespeichert, wobei i und j Indizes sind, welche den Impulsabgabe-Schallgeber, der die impulsförmige akustische Welle ausgesendet hat, bzw. den Impulsabgabe-Schallgeber, der die impulsförmige akustische Welle empfangen hat, die dem jeweiligen gemessenen Signal $s3_{ij}(t)$ entspricht, bezeichnen,
   (c3) es werden, wenigstens ausgehend von den gemessenen Signalen $s3_{ij}(t)$, die zeitlichen Verschiebungen bestimmt, die auf die impulsförmigen akustischen Wellen, die durch die verschiedenen Impulsabgabe-Schallgeber (T1-T8) erzeugt werden, jeweils anzuwenden sind, um die impulsförmigen akustischen Wellen auf die Gasblase (5) zu fokussieren.

3. Verfahren nach Anspruch 2, wobei während des Teilschritts (c3) Laufzeiten der impulsförmigen akustischen Wellen zwischen jedem Impulsabgabe-Schallgeber (T1-T8) und der Gasblase bestimmt werden, und wobei daraus die zeitlichen Verschiebungen bestimmt werden, die auf die impulsförmigen akustischen Wellen, die durch die verschiedenen Impulsabgabe-Schallgeber erzeugt werden, jeweils anzuwenden sind, um die impulsförmigen akustischen Wellen auf die Gasblase zu fokussieren.

4. Verfahren nach einem der Ansprüche 2 und 3, wobei wenigstens vor dem Schritt (b) ein vorbereitender Eichungs-Schritt (a0) durchgeführt wird, wobei dieser Eichungs-Schritt die folgenden Teilschritte umfasst:

(a01) Es wird bewirkt, dass der Reihe nach durch jeden Impulsabgabe-Schallgeber (T1-T8) eine impulsförmige akustische Welle (S2) mit der ersten Amplitude ausgesendet wird,

(a02) nach jeder Aussendung einer impulsförmigen akustischen Welle wird bewirkt, dass durch jeden Impulsabgabe-Schallgeber (T1-T8) akustische Signale $s1_{ij}(t)$ gemessen werden, die durch die Ausbreitung der impulsförmigen akustischen Welle in dem Flüssigkeitsbehälter (2) erzeugt werden, und die gemessenen Signale $s1_{ij}(t)$ werden gespeichert,

während des Schrittes (c) wird bewirkt, dass durch jeden Impulsabgabe-Schallgeber (T1-T8) akustische Signale $s2_{ij}(t)$ gehört werden, die während der Aussendung der stationären akustischen Welle in Gegenwart der Gasblase (5) empfangen wurden, und während des Teilschrittes (c3) werden korrigierte Signale $s_{ij}(t) = s3_{ij}(t) - s1_{ij}(t) - s2_{ij}(t)$ berechnet, und anschließend werden die zeitlichen Verschiebungen ausgehend von den korrigierten Signalen berechnet.

5. Verfahren nach Anspruch 4, wobei die zeitlichen Verschiebungen durch Interkorrelation zwischen den korrigierten Signalen bestimmt werden.

6. Verfahren nach einem der vorhergehenden Ansprüche, wobei n mindestens gleich 8 ist.

7. Verfahren nach einem der vorhergehenden Ansprüche, wobei die impulsförmigen akustischen Wellen (S2) impulsförmige akustische Kompressionswellen sind und während des Schrittes (d) Zeitpunkte der Aussendung der impulsförmigen akustischen Kompressionswellen durch die verschiedenen Impulsabgabe-Schallgeber (T1-T8) bestimmt werden, derart, dass jede impulsförmige akustische Kompressionswelle, die durch die Impulsabgabe-Schallgeber erzeugt wird, die Gasblase (5) während einer Kontraktionsphase erreicht.

8. Verfahren nach Anspruch 7, wobei während des Schrittes (d) die Aussendung der impulsförmigen akustischen Kompressionswellen durch die verschiedenen Impulsabgabe-Schallgeber mit dem Verformungszyklus synchronisiert wird, dem die Gasblase folgt, derart, dass die impulsförmigen akustischen Kompressionswellen wenigstens bis zum Ende der Kontraktionsphase einen Überdruck in der die Gasblase umgebenden Flüssigkeit erzeugen.

9. Verfahren nach einem der Ansprüche 7 und 8, wobei während des Schrittes (d) die Aussendung der impulsförmigen akustischen Kompressionswellen durch die verschiedenen Impulsabgabe-Schallgeber (T1-T8) mit dem Verformungszyklus synchronisiert wird, dem die Gasblase folgt, derart, dass jede impulsförmige akustische Kompressionswelle, die durch die Impulsabgabe-Schallgeber erzeugt wird, die Gasblase (5) im Wesentlichen dann erreicht, wenn die Gasblase einen maximalen Durchmesser aufweist.

10. Verfahren nach einem der Ansprüche 7 bis 9, wobei die impulsförmigen akustischen Kompressionswellen eine akustische Schwingung mit einer Amplitude, die mindestens 0,8 MPa (8 bar) beträgt, in der Flüssigkeit in der Nähe der Gasblase (5) erzeugen.

11. Verfahren nach einem der Ansprüche 7 bis 10, wobei während des Schrittes (e) bewirkt wird, dass der impulsförmigen akustischen Kompressionswelle, die von einem jeweiligen Impulsabgabe-Schallgeber (T1-T8) stammt, eine impulsförmige akustische Dilatationswelle (S3) unmittelbar vorangeht, welche geeignet ist, die Gasblase (5) während der Expansionsphase (10) zu erreichen, welche der Kontraktionsphase (12) vorangeht, in der die Gasblase die impulsförmigen akustischen Kompressionswellen empfängt.

12. Verfahren nach einem der vorhergehenden Ansprüche, wobei bewirkt wird, dass die stationäre akustische Welle (S1) durch mindestens zwei Schallgeber zur Erzeugung einer stationären Welle (T'1, T'2) erzeugt wird, die von den Impulsabgabe-Schallgebern (T1-T8) verschieden sind.

13. Verfahren nach einem der vorhergehenden Ansprüche, wobei die stationäre akustische Welle (S1) eine Ultraschallwelle mit einer Frequenz im Bereich von 20 bis 30 kHz und einer Amplitude in der Nähe von 0,13 MPa (1,3 bar) ist.

# FIG. 1

# FIG. 2

# FIG. 3

# FIG. 4

## FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 5659173 A

**Littérature non-brevet citée dans la description**

• Sonoluminescence and the prospects for table-top micro-thermonuclear fusion. Physics Letters A. Elsevier, 05 Février 1996, vol. 211, 69-74